# EUROPEAN PATENT SPECIFICATION

(11) **EP 3 444 311 B1**
(45) Date of publication and mention of the grant of the patent: **12.11.2025**
(21) Application number: 17782295.4
(22) Date of filing: 06.04.2017
(51) Int. Cl.: C09J 153/00, C08F 297/02, C09J 7/20, C09J 133/10

(54) **HOT-MELT PRESSURE-SENSITIVE ADHESIVE COMPOSITION**
DRUCKEMPFINDLICHER HEISSSCHMELZKLEBER
COMPOSITION ADHÉSIVE AUTOCOLLANTE THERMOFUSIBLE

(30) Priority: 13.04.2016 JP 2016080189
(43) Date of publication of application: 20.02.2019
(73) Proprietor: Kuraray Co., Ltd., Okayama 710-0801 (JP)
(72) Inventor: NAKADA Kanayo, Tsukuba-shi Ibaraki 305-0841 (JP); MORISHITA Yoshihiro, Kamisu-shi Ibaraki 314-0197 (JP)
(74) Representative: Müller-Boré & Partner Patentanwälte PartG mbB
(86) International application number: PCT/JP2017/014337
(87) International publication number: WO 2017/179479

(56) References cited:
- WO-A1-2015/060224
- JP-A- 2000 119 619
- JP-A- 2004 107 447
- JP-A- 2006 506 505
- JP-A- 2006 511 640
- JP-A- H09 324 165

## Description

The present invention relates to a hot melt adhesive composition which contains a specific acrylic block copolymer and is melt processable at a relatively low temperature, and to an adhesive product comprising an adhesive layer comprising the hot melt adhesive composition.

Adhesives are used for adhesive products having an adhesive layer on at least part of a surface of a base layer, such as adhesive sheets, adhesive films and adhesive tapes. The conventional adhesives that are frequently used are of solution type which includes a base polymer, such as rubber-based adhesives and acrylic adhesives. In addition, other types of adhesives such as hot melt adhesives have recently come into use. In particular, acrylic adhesives have gained a wide use because of their excellent transparency, weather resistance and durability. Acrylic adhesives including acrylic block copolymers have been presented from the points of view of application properties and adhesion properties.

For example, Patent Document 1 discloses a block copolymer usable as an adhesive, and a method for producing such copolymers. Patent Document 2 discloses an adhesive composition including a (meth)acrylic block copolymer. Further, Patent Document 3 presents an adhesive composition that contains a (meth) acrylic block copolymer including a high elastic modulus polymer block which includes a plurality of types of (meth) acrylate ester units and which has an increased glass transition temperature, and a low elastic modulus polymer block which includes a type of (meth) acrylate ester units, the adhesive composition being described to have enhanced properties such as high cohesive strength compared to adhesive compositions including conventional (meth)acrylic block copolymers.

However, the adhesive compositions described in the above documents still have room for improvement in terms of, for example, hot melt processability and adhesion properties.

Further, WO 2015/060224 A1 describes a hot melt adhesive composition, JP H09 324165 A describes an acrylic tacky agent composition, and JP 2006 511640 A describes a star shaped acrylic block copolymer.

Patent Document 1: JP-A-2001-200026
Patent Document 2: JP-A-2001-348553
Patent Document 3: JP-A-2006-506505
Patent Document 4: JP-A-H06-93060
Patent Document 5: JP-A-H05-507737
Patent Document 6: JP-A-H11-335432

Non Patent Document 1: Macromolecular Chemistry and Physics, 2000, vol. 201, pp. 1108-1114

Objects of the present invention are therefore to provide adhesive compositions which can be hot-melt processed by being thermally melted at a relatively low temperature and which have excellent adhesion force, holding power and tack, and to provide adhesive products including the adhesive compositions.

The present invention achieves the above objects by providing the following:
[1] A hot melt adhesive composition comprising an acrylic block copolymer (I) comprising at least one polymer block (A) comprising methacrylate ester units, and at least one polymer block (B) comprising acrylate ester units, wherein the methacrylate ester units constituting the polymer block (A) include at least a methyl methacrylate (a1) unit and a methacrylate ester (a2) unit represented by the general formula CH₂=C(CH₃)-COOR¹ (1) wherein R- is a C₂₋₁₆ organic group, and wherein the polymer block (A) has a glass transition temperature of not less than 0°C and not more than 95°C, and the polymer block (B) has a glass transition temperature of not less than -80°C and less than 0°C, as measured in accordance with the method specified herein.
[2] The hot melt adhesive composition described in [1], wherein the acrylic block copolymer (I) has a weight average molecular weight (Mw) of 30,000 to 300,000, as measured in accordance with the method specified herein.
[3] The hot melt adhesive composition described in [1] or [2], wherein the acrylic block copolymer (I) has a molecular weight distribution (Mw/Mn) of 1.0 to 1.5.
[4] The hot melt adhesive composition described in any one of [1] to [3], wherein the polymer block (A) has a mass ratio ((a1)/(a2)) of the methyl methacrylate (a1) units to the methacrylate ester (a2) units of 5/95 to 95/5.
[5] The hot melt adhesive composition described in any one of [1] to [4], wherein the acrylate ester units constituting the polymer block (B) include an acrylate ester (b) unit represented by the general formula CH₂=CH-COOR² (2) wherein R² is a C₁₋₁₂ organic group.
[6] The hot melt adhesive composition described in [5], wherein the acrylate ester units constituting the polymer block (B) include an acrylate ester (b1) unit represented by the formula (2) wherein R² is a C₄₋₆ organic group, and an acrylate ester (b2) unit represented by the formula (2) wherein R² is a C₇₋₁₂ organic group.
[7] The hot melt adhesive composition described in [6], wherein the polymer block (B) has a mass ratio ((b1)/ (b2)) of the acrylate ester (b1) units to the acrylate ester (b2) units of 1/99 to 95/5.
[8] The hot melt adhesive composition described in any one of [1] to [7], wherein the methacrylate ester (a2) unit is an n-butyl methacrylate unit.
[9] The hot melt adhesive composition described in any one of [1] to [8], wherein the acrylic block copolymer (I) has a complex viscosity at 160°C of not more than 6,000 Pa·s, as measured in accordance with the method specified herein.
[10] The hot melt adhesive composition described in any one of [1] to [9], wherein the acrylic block copolymer (I) has a peak top of loss shear modulus at a temperature of not more than 135°C in a region of temperatures of 25°C and above, as measured in accordance with the method specified herein.
[11] An adhesive product comprising an adhesive layer comprising the hot melt adhesive composition described in any one of [1] to [10].

The adhesive compositions provided by the present invention can be hot-melt processed by being thermally melted at a relatively low temperature (for example, 60 to 140°C) and further exhibit excellent adhesion force, holding power and tack.

The present invention will be described in detail hereinbelow. In the specification, "(meth)acrylate ester" is a general term indicating both "methacrylate ester" and "acrylate ester", and "(meth)acrylic" is a general term indicating both "methacrylic" and "acrylic".

A hot melt adhesive composition of the present invention comprises an acrylic block copolymer (I). This acrylic block copolymer (I) includes at least one polymer block (A) including methacrylate ester units, and at least one polymer block (B) including acrylate ester units. The methacrylate ester units constituting the polymer block (A) include at least a methyl methacrylate (a1) unit and a methacrylate ester (a2) unit represented by the general formula CH₂=C(CH₃)-COOR¹ (1) wherein R¹ is a C₂₋₁₆ organic group. The content of the acrylic block copolymer (I) in the hot melt adhesive composition of the present invention is preferably not less than 50 mass%, more preferably not less than 70 mass%, and still more preferably not less than 90 mass%, and the content may be 100 mass% (the composition may be free from components other than the acrylic block copolymer (I)).

The polymer block (A) contains methyl methacrylate (a1) units. By virtue of the methyl methacrylate (a1) units being included in the polymer block (A), the phase separation between the polymer block (A) and the polymer block (B) becomes clearer so that the hot melt adhesive composition that is obtained attains an increase in cohesion force.

In addition to the methyl methacrylate (a1) units, the polymer block (A) contains methacrylate ester (a2) units represented by the general formula CH₂=C(CH₃)-COOR¹ (1) wherein R¹ is a C₂₋₁₆ organic group. By virtue of the methacrylate ester units (a2) being included in the polymer block (A), the hot melt adhesive composition that is obtained can be melt processed at a relatively low temperature and attains excellent adhesion properties such as adhesion force, holding power and tack.

Examples of the methacrylate esters (a2) include methacrylate esters having no functional groups such as ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, isobornyl methacrylate, phenyl methacrylate and benzyl methacrylate; and methacrylate esters having a functional group such as methoxyethyl methacrylate, ethoxyethyl methacrylate, diethylaminoethyl methacrylate, 2-hydroxyethyl methacrylate, 2-aminoethyl methacrylate, glycidyl methacrylate and tetrahydrofurfuryl methacrylate.

Of these, methacrylate esters having no functional groups are preferable in order to enhance the transparency, heat resistance and durability of the obtainable hot melt adhesive composition. Propyl methacrylate, n-butyl methacrylate, isobutyl methacrylate, sec-butyl methacrylate, tert-butyl methacrylate, n-butyl methacrylate, isobutyl methacrylate and sec-butyl methacrylate are preferable, and n-butyl methacrylate is more preferable for the reason that the hot melt adhesive composition that is obtained is melt processable at a relatively low temperature with increased ease, exhibits excellent adhesion properties such as adhesion force, and tends to show enhanced cohesion force.

To ensure that the hot melt adhesive composition that is obtained is melt processable at a relatively low temperature with increased ease and exhibits still enhanced adhesion properties such as adhesion force, holding power and tack, the polymer block (A) preferably has a mass ratio ((a1)/(a2)) of the methyl methacrylate (a1) units to the methacrylate ester (a2) units of 5/95 to 95/5, more preferably 30/70 to 90/10, and still more preferably 60/40 to 90/10. The advantageous effects of the present invention are attained more significantly when the mass ratio ((a1)/(a2)) of the methyl methacrylate (a1) units to the methacrylate ester (a2) units in the polymer block (A) is 60/40 to 85/15, or more preferably 60/40 to 70/30.

The proportion of the methacrylate ester units contained in the polymer block (A) is preferably not less than 60 mass%, more preferably not less than 80 mass%, and still more preferably not less than 90 mass% of the polymer block (A). The proportion may be 100 mass% of the polymer block (A).

To ensure that an adhesive that is obtained exhibits excellent adhesion properties, the glass transition temperature of the polymer block (A) is not less than 0°C and not more than 95°C, preferably not less than 20°C and not more than 95°C, and more preferably not less than 40°C and not more than 90°C. The glass transition temperature of the polymer block (A) may be controlled by, for example, selecting the types of monomers for forming the polymer block (A), or the polymerization method. The glass transition temperature in the present invention is an extrapolated onset temperature (Tgi) determined by performing DSC of a polymer block or an acrylic block copolymer at a heat-up rate of 10°C/min and extrapolating the transition region of the polymer block that is seen in the curve obtained.

The weight average molecular weight (Mw) of the polymer block (A) is not particularly limited, but is preferably in the range of 1,000 to 50,000, and more preferably in the range of 4, 000 to 20, 000. If the weight average molecular weight (Mw) of the polymer block (A) is below this range, the acrylic block copolymer (I) that is obtained disadvantageously shows poor cohesion force. If the weight average molecular weight (Mw) of the polymer block (A) is above this range, the melt viscosity of the acrylic block copolymer (I) that is obtained is so increased that the productivity and hot-melt processability of the acrylic block copolymer (I) may be deteriorated. The molecular weight such as weight average molecular weight (Mw) in the present invention is a value of molecular weight measured by gel permeation chromatography (GPC) in terms of standard polystyrenes.

The polymer block (B) contains acrylate ester units. By virtue of the acrylate ester units being included in the polymer block (B), the phase separation between the polymer block (A) and the polymer block (B) tends to become clearer, and an adhesive that is obtained attains excellent adhesion properties. The acrylate ester units are largely classified into acrylate ester (b) units represented by the general formula CH₂=CH-COOR² (2) wherein R² is a C₁₋₁₂ organic group, and acrylate ester (b') units other than the acrylate ester (b) units.

Examples of the acrylate esters (b) include acrylate esters (b1) represented by the formula (2) wherein R² is a C₄₋₆ organic group, acrylate esters (b2) represented by the formula (2) wherein R² is a C₇₋₁₂ organic group, and acrylate esters (b3) represented by the formula (2) wherein R² is a C₁₋₃ organic group.

Examples of the acrylate esters (b1) include acrylate esters having no functional groups, such as n-butyl acrylate, isobutyl acrylate, sec-butyl acrylate, tert-butyl acrylate, amyl acrylate, isoamyl acrylate, n-hexyl acrylate, cyclohexyl acrylate and phenyl acrylate; and acrylate esters having a functional group, such as ethoxyethyl acrylate, diethylaminoethyl acrylate and tetrahydrofurfuryl acrylate.

When the polymer block (B) includes the acrylate ester units (b1), the hot melt adhesive composition that is obtained tends to attain excellent flexibility.

Of the above compounds, acrylate esters having no functional groups are preferable, and such acrylate esters as n-butyl acrylate and n-hexyl acrylate are more preferable in order to enhance the transparency, flexibility, cold resistance and adhesion properties at low temperatures of the hot melt adhesive composition that is obtained. The acrylate esters (b1) may be used singly, or two or more may be used in combination.

Examples of the acrylate esters (b2) include 2-ethylhexyl acrylate, n-octyl acrylate, isooctyl acrylate, decyl acrylate, isobornyl acrylate, lauryl acrylate, benzyl acrylate and phenoxyethyl acrylate. When the polymer block (B) includes the acrylate ester units (b2), the composition tends to attain enhanced compatibility with tackifier resins including low-polarity hydrocarbon resins, and plasticizers such as process oils.

Of the above compounds, such acrylate esters as 2-ethylhexyl acrylate, n-octyl acrylate, isooctyl acrylate, lauryl acrylate and phenoxyethyl acrylate are preferable in order to enhance the transparency, flexibility, cold resistance and adhesion properties at low temperatures of the hot melt adhesive composition that is obtained. Further, 2-ethylhexyl acrylate, n-octyl acrylate and isooctyl acrylate are more preferable for the reason that the hot melt adhesive composition that is obtained exhibits excellent adhesion properties (such as tack and adhesion force) at low temperatures (10 to -40°C) and shows stable adhesion force at a wide range of peeling speed. Further, 2-ethylhexyl acrylate is particularly preferable for the reasons that the polymer block (B) is phase-separated from the polymer block (A) more clearly and the hot melt adhesive composition exhibits particularly high cohesion force. The acrylate esters (b2) may be used singly, or two or more may be used in combination.

Examples of the acrylate esters (b3) include acrylate esters having no functional groups, such as methyl acrylate, ethyl acrylate, n-propyl acrylate and isopropyl acrylate; and acrylate esters having a functional group, such as methoxyethyl acrylate, 2-hydroxyethyl acrylate, 2-aminoethyl acrylate and glycidyl acrylate.

When the polymer block (B) includes the acrylate ester units (b3), the hot-melt processability is enhanced, and the migration of a plasticizer in an adherend into the hot melt adhesive tends to be small.

Examples of the acrylate esters (b') include pentadecyl acrylate and stearyl acrylate.

The acrylate ester units residing in the polymer block (B) may be those derived from a single acrylate ester or a combination of two or more acrylate esters. For the reason that an adhesive that is obtained attains excellent cold resistance and compatibility with tackifier resins, the acrylate ester is preferably an acrylate ester (b), and more preferably an acrylate ester (b1) or an acrylate ester (b2).

The acrylate ester units residing in the polymer block (B) may be composed of acrylate ester (b1) units and acrylate ester (b2) units. When the acrylate ester units in the polymer block (B) include acrylate ester (b1) units and acrylate ester (b2) units, the hot melt adhesive composition that is obtained tends to exhibit excellent transparency, flexibility, cold resistance and adhesion properties at low temperatures. When the polymer block (B) includes both acrylate ester (b1) units and acrylate ester (b2) units, the combination of such acrylate esters (b1)/(b2) may be, for example, n-butyl acrylate/2-ethylhexyl acrylate, n-butyl acrylate/octyl acrylate, n-hexyl acrylate/2-ethylhexyl acrylate, n-butyl acrylate/lauryl acrylate, n-butyl acrylate/benzyl acrylate, or n-butyl acrylate/[2-ethylhexyl acrylate/lauryl acrylate].

For reasons such as that an adhesive that is obtained attains good adhesion properties and high whitening resistance and that the increase in adhesion force with time is small, the mass ratio (b1)/(b2) of the acrylate ester (b1) units to the acrylate ester (b2) units in the polymer block (B) is preferably 1/99 to 95/5, more preferably 5/95 to 80/20, and still more preferably 10/90 to 60/40. The contents of the acrylate ester (b1) units and the acrylate ester (b2) units in the polymer block (B) may be determined by, for example, ¹H-NMR.

In the case where the polymer block (B) is composed of a plurality of kinds of acrylate ester units, the polymer block may be a random copolymer or block copolymer of such acrylate esters, or may be a tapered block copolymer. When the acrylic block copolymer (I) includes two or more polymer blocks (B), the structures of the polymer blocks (B) may be the same as or different from one another.

The proportion of the acrylate ester units present in the polymer block (B) is preferably not less than 60 mass% of the polymer block (B), and is more preferably not less than 80 mass%, and still more preferably not less than 90 mass%. The proportion may be 100 mass% of the polymer block (B).

The polymer block (A) and the polymer block (B) may contain monomers of each other while still ensuring that the advantageous effects of the present invention are not impaired. Where necessary, these polymer blocks may contain other monomers. Examples of such additional monomers include carboxyl group-containing vinyl monomers such as (meth) acrylic acid, crotonic acid, maleic acid, maleic anhydride, fumaric acid and (meth)acrylamide; functional group-containing vinyl monomers such as (meth)acrylonitrile, vinyl acetate, vinyl chloride and vinylidene chloride; aromatic vinyl monomers such as styrene, α-methylstyrene, p-methylstyrene and m-methylstyrene; conjugated diene monomers such as butadiene and isoprene; olefin monomers such as ethylene, propylene, isobutene and octene; and lactone monomers such as ε-caprolactone and valerolactone. When used, these monomers are usually added in a small amount. The amount is preferably not more than 40 mass%, more preferably not more than 20 mass%, and still more preferably not more than 10 mass% relative to the total mass of the monomers used in each polymer block.

To ensure that an adhesive that is obtained exhibits excellent cold resistance and high compatibility with tackifier resins, the glass transition temperature of the polymer block (B) is not less than -80°C and less than 0°C, preferably not less than -75°C and not more than -20°C, and more preferably not less than -70°C and not more than -40°C.

In the acrylic block copolymer (I) used in the present invention, the content of the polymer block (A) is preferably 5 to 95 mass% and the content of the polymer block (B) is preferably 95 to 5 mass%. To ensure that the hot melt adhesive composition will exhibit excellent adhesion properties and that the block copolymer or the hot melt adhesive composition including the copolymer can be supplied in an easily handleable form (such as, for example, pellets), it is preferable that the polymer block (A) represent 15 to 60 mass% and the polymer block (B) 85 to 40 mass%, it is more preferable that the polymer block (A) represent 18 to 60 mass% and the polymer block (B) 82 to 40 mass%, it is still more preferable that the polymer block (A) represent 22 to 50 mass% and the polymer block (B) 78 to 50 mass%, and it is particularly preferable that the polymer block (A) represent 22 to 40 mass% and the polymer block (B) 78 to 60 mass%. When the content of the polymer block (B) is 85 to 40 mass%, the occurrence of whitening after storage under humid and hot conditions is advantageously reduced.

The acrylic block copolymer (I) is preferably represented by any of the following general formulae in which "A" denotes the polymer block (A) and "B" the polymer block (B):

(A-B)ₙ

(A-B)ₙ-A

B-(A-B)ₙ

(A-B)ₙ-Z

(B-A)ₙ-Z

In the formulae, n is an integer of 1 to 30, and Z represents a coupling site (a coupling site resulting from the formation of a chemical bond by reaction between a coupling agent and a polymer end)). The value of n is preferably 1 to 15, more preferably 1 to 8, and still more preferably 1 to 4. Of the above structures, a linear block copolymer represented by (A-B)ₙ, (A-B)ₙ-A or B-(A-B)ₙ is preferable. A linear diblock copolymer represented by A-B, and a linear triblock copolymer represented by A-B-A are more preferable.

For the reason that the production of the hot melt adhesive composition is facilitated, the weight average molecular weight (Mw) of the acrylic block copolymer (I) used in the present invention is preferably 30,000 to 300,000, more preferably 40,000 to 250,000, and still more preferably 50,000 to 200,000. The acrylic block copolymer (I) tends to exhibit a relatively low viscosity even when its weight average molecular weight (Mw) is high. Thus, it is also preferable that the weight average molecular weight (Mw) be 60,000 or above, or more preferably 70,000 or above in order to facilitate the melt processing of a hot melt adhesive while maintaining good characteristics of the adhesive in a practical temperature range. It is also preferable that the weight average molecular weight (Mw) be 100,000 to 200,000 for the reason that a hot melt adhesive that is obtained exhibits high cohesion force.

When the hot melt adhesive composition of the present invention is applied by a method in which the composition is melted, such as hot melt coating, T-die extrusion, blown-film extrusion, calendering or lamination, the weight average molecular weight (Mw) of the acrylic block copolymer (I) is preferably 30,000 to 150,000, and more preferably 35,000 to 100,000 from the point of view of the productivity in coating operation or film formation. To attain a stable viscosity behavior during the process such as extrusion and to achieve low viscosity and excellent application properties in the hot melt coating operation, it is particularly preferable that the weight average molecular weight (Mw) be 40,000 to 90,000.

The molecular weight distribution, that is, the ratio (Mw/Mn) of the weight average molecular weight (Mw) to the number average molecular weight (Mn) of the acrylic block copolymer (I) used in the present invention is preferably 1.0 to 1.5. For the reason that the hot melt adhesive composition exhibits a high cohesion force at a high temperature, the molecular weight distribution is more preferably 1.0 to 1.4, and still more preferably 1.0 to 1.3.

The complex viscosity at 160°C of the acrylic block copolymer (I) used in the present invention is preferably not more than 6,000 Pa·s. For the reason that the composition can be melt processed easily at a relatively low temperature, the complex viscosity is more preferably not more than 3,000 Pa·s, and still more preferably not more than 1,000 Pa·s. The complex viscosity may be determined from dynamic viscoelasticity in torsional vibration. The measurement method described in detail in EXAMPLES may be adopted.

The complex viscosity of the acrylic block copolymer (I) at 160°C may be lowered by, for example, increasing the mass ratio of the methacrylate ester (a2) units in the polymer block (A).

The acrylic block copolymer (I) used in the present invention preferably has a peak top of loss shear modulus at a temperature of not more than 135°C in the region of temperatures of room temperature (25°C) and above. For the reason that the composition can be melt processed at a relatively low temperature, the above temperature is more preferably not more than 130°C, and still more preferably not more than 120°C, and may be not more than 110°C, or may be not more than 100°C. The temperature of the peak top of loss shear modulus may be determined from dynamic viscoelasticity in torsional vibration. The measurement method described in detail in EXAMPLES may be adopted.

The temperature of the peak top of loss shear modulus of the acrylic block copolymer (I) may be lowered by, for example, increasing the mass ratio of the methacrylate ester (a2) units in the polymer block (A).

The acrylic block copolymer (I) used in the present invention may be produced by any method without limitation as long as the obtainable polymer satisfies the requirements in the present invention regarding the chemical structure. Methods in accordance with known techniques may be adopted. In general, a block copolymer with a narrow molecular weight distribution is obtained by the living polymerization of monomers that will form structural units. Examples of the living polymerization processes include living polymerization using an organic rare earth metal complex as a polymerization initiator (see Patent Document 4), living anionic polymerization performed with an organic alkali metal compound as a polymerization initiator in the presence of a mineral acid salt such as an alkali metal or alkaline earth metal salt (see Patent Document 5), living anionic polymerization performed with an organic alkali metal compound as a polymerization initiator in the presence of an organoaluminum compound (see Patent Document 6), and atom transfer radical polymerization (ATRP) (see Non Patent Document 1).

Of these production processes, living anionic polymerization performed with an organic alkali metal compound as a polymerization initiator in the presence of an organoaluminum compound is advantageous in that the obtainable block copolymer has high transparency, is less odorous because of little residual monomers, and generates fewer bubbles after the hot melt adhesive composition including the copolymer is laminated. Other advantages are that the methacrylate ester polymer block has a highly syndiotactic molecular structure to provide an increase in the heat resistance of the hot melt adhesive composition, and that the living polymerization is feasible under relatively mild temperature conditions and thus the environmental load in industrial production (mainly the electricity for refrigerators to control the polymerization temperature) is small.

Examples of the organoaluminum compounds include those organoaluminum compounds represented by the following general formula (3).

AlR³R⁴R⁵ (3)

(In the formula, R³, R⁴ and R⁵ are each independently an optionally substituted alkyl group, an optionally substituted cycloalkyl group, an optionally substituted aryl group, an optionally substituted aralkyl group, an optionally substituted alkoxy group, an optionally substituted aryloxy group or a N,N-disubstituted amino group, or R³ is any of these groups and R⁴ and R⁵ together form an optionally substituted arylenedioxy group.)

From points of view such as high living properties in the polymerization and easy handling, preferred organoaluminum compounds represented by the general formula (3) are, among others, isobutylbis(2,6-di-tert-butyl-4-methylphenoxy)aluminum, isobutylbis(2,6-di-tert-butylphenoxy)aluminum and isobutyl[2,2'-methylenebis(4-methyl-6-tert-butylphenoxy)]a luminum.

Examples of the organic alkali metal compounds include alkyllithiums and alkyldilithiums such as n-butyllithium, sec-butyllithium, isobutyllithium, tert-butyllithium, n-pentyllithium and tetramethylenedilithium; aryllithiums and aryldilithiums such as phenyllithium, p-tolyllithium and lithiumnaphthalene; aralkyllithiums and aralkyldilithiums such as benzyllithium, diphenylmethyllithium and dilithium formed by the reaction of diisopropenylbenzene and butyllithium; lithiumamides such as lithiumdimethylamide; and lithium alkoxides such as methoxylithium and ethoxylithium. These compounds may be used singly, or two or more may be used in combination. In particular, alkyllithiums are preferable because of high polymerization initiation efficiency. Tert-butyllithium and sec-butyllithium are more preferable, and sec-butyllithium is still more preferable.

The living anionic polymerization is usually carried out in the presence of a solvent that is inactive in the polymerization reaction. Examples of the solvents include aromatic hydrocarbons such as benzene, toluene and xylene; halogenated hydrocarbons such as chloroform, methylene chloride and carbon tetrachloride; and ethers such as tetrahydrofuran and diethyl ether.

The acrylic block copolymer (I) used in the present invention may be produced **by,** for example, repeating as many times as desired a step in which a desired polymer block (such as a polymer block (A) or a polymer block (B)) is formed onto a desired living polymer end obtained by the polymerization of a monomer, and terminating the polymerization reaction. Specifically, the acrylic block copolymer (I) may be produced by, for example, performing polymerization with an organic alkali metal compound as a polymerization initiator in the presence of an organoaluminum compound through a plurality of steps including a first step of polymerizing a monomer for forming a first polymer block, a second step of polymerizing a monomer for forming a second polymer block and optionally a third step of polymerizing a monomer for forming a third polymer block, and terminating the polymerization reaction by reacting the active end of the resultant polymer with a terminator such as an alcohol. By this method, a binary block (diblock) copolymer composed of polymer block (A)-polymer block (B), a ternary block (triblock) copolymer composed of polymer block (A)-polymer block (B)-polymer block (A), a quaternary block (tetrablock) copolymer composed of polymer block (A)-polymer block (B)-polymer block (A)-polymer block (B), or the like can be produced.

The polymerization temperature is preferably 0 to 100°C when the reaction forms a polymer block (A), and is preferably -50 to 50°C when the reaction forms a polymer block (B). If the polymerization temperature is below this range, the reaction is slow and takes a long time to complete. If, on the other hand, the polymerization temperature is higher than the above range, more living polymer ends are deactivated to broaden the molecular weight distribution or to cause a failure to obtain a desired block copolymer. The polymerization of a polymer block (A) and that of a polymer block (B) may be each accomplished in 1 second to 20 hours.

The hot melt adhesive composition of the present invention may contain additives such as tackifier resins, plasticizers, other polymers, softeners, heat stabilizers, light stabilizers, antistatic agents, flame retardants, foaming agents, colorants, dyes, refractive index modifiers, fillers, curing agents and anti-blocking agents, while still achieving the advantageous effects of the present invention. These additional polymers and additives may be used singly, or two or more may be used in combination.

When a tackifier resin is added to the hot melt adhesive composition of the present invention, adhesion properties, tack and compatibility are enhanced. Examples of the tackifier resins include hydrocarbon resins, terpene resins, rosin resins and products obtained by adding hydrogen to these resins (hereinafter, such addition of hydrogen is sometimes written as "hydrogenated").

The hydrocarbon resins in the present invention are oligomers obtained by polymerizing a raw material including a Cs fraction, a C₉ fraction, a component(s) purified from a C₅ fraction, a component(s) purified from a C₉ fraction, or a mixture of these fractions or purified components. The C₅ fraction usually includes cyclopentadiene, dicyclopentadiene, isoprene, 1,3-pentadiene, 2-methyl-1-butene, 2-methyl-2-butene, 1-pentene, 2-pentene and cyclopentene. The C₉ fraction usually includes styrene, allylbenzene, α-methylstyrene, vinyltoluene, β-methylstyrene and indene. The C₉ fraction sometimes contains a small amount of a C₈ fraction and a C₁₀ fraction.

The hydrocarbon resins are largely classified into C₅ resins from the C₅ fraction or a component (s) purified therefrom (also written as aliphatic hydrocarbon resins), C₉ resins from the C₉ fraction or a component(s) purified therefrom (also written as aromatic hydrocarbon resins), and C₅-C₉ copolymer resins from a mixture of the C₅ fraction or a component(s) purified therefrom and the C₉ fraction or a component(s) purified therefrom (also written as aliphatic-aromatic copolymer hydrocarbon resins).

The terpene resins in the present invention are oligomers obtained by polymerizing a raw material including a terpene monomer. Terpenes generally indicate polymers of isoprene (C₅H₈) and are classified into monoterpene (C₁₀H₁₆), sesquiterpene (C₁₅H₂₄), diterpene (C₂₀H₃₂), and so on. The terpene monomers are monomers which have these structures as base skeletons. Examples thereof include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, γ-terpineol, sabinene, paramenthadienes and carenes. The raw material including a terpene monomer may include other monomer copolymerizable with the terpene monomer. Examples of such additional monomers include coumarone monomers such as benzofuran (C₈H₆O); vinyl aromatic compounds such as styrene, α-methylstyrene, vinyltoluene, divinyltoluene and 2-phenyl-2-butene; phenolic monomers such as phenol, cresol, xylenol, propylphenol, nonylphenol, hydroquinone, resorcinol, methoxyphenol, bromophenol, bisphenol A and bisphenol F.

The rosin resins in the present invention are amber and amorphous natural resins obtained from pine and are chiefly composed of a mixture of abietic acid and isomers thereof. The rosin resins also include modified products such as esters and polymers obtained by making use of the reactivity of abietic acid or isomers thereof.

The tackifier resins may be purchased in the market. Some suitable tackifier resins which are available in the market are hydrocarbon resins such as QUINTONE 100 series (manufactured by ZEON CORPORATION), ARKON M series and ARKON P series (manufactured by ARAKAWA CHEMICAL INDUSTRIES, LTD.) and I-MARV series (manufactured by Idemitsu Kosan Co., Ltd.); terpene resins such as CLEARON series, YS POLYSTER series and YS RESIN series (all manufactured by YASUHARA CHEMICAL CO., LTD.) and TAMANOL 901 (manufactured by ARAKAWA CHEMICAL INDUSTRIES, LTD.); and rosin resins such as PINECRYSTAL KE-100, PINECRYSTAL KE-311, PINECRYSTAL KE-359, PINECRYSTAL KE-604, PINECRYSTAL D-6250, PENSEL D125, PENSEL D160, ESTER GUM H series and ESTER GUM HP series (all manufactured by ARAKAWA CHEMICAL INDUSTRIES, LTD.) and Foral 85 (manufactured by Pinova).

Of the tackifier resins, hydrocarbon resins, terpene resins, rosin resins and hydrogenated products of these resins are preferable because high adhesion force and tack are obtained. To ensure adhesion force to a wide variety of adherends, hydrocarbon resins, terpene resins and hydrogenated products of these resins are more preferable. These resins may be used singly, or two or more may be used in combination. To ensure high adhesion force, the tackifier resin is preferably one having a softening point of 50 to 160°C.

Of the tackifier resins, one which is selected from hydrocarbon resins, terpene resins and rosin resins and has an iodine value measured in accordance with JIS K0070 of not more than 120 g is preferable because the use of such a tackifier resin realizes excellent weather resistance, little coloration and excellent adhesion force and tack, and also because excellent holding power and higher compatibility tend to be obtained. To ensure excellent compatibility with the acrylic block copolymer (I), the iodine value of the tackifier resin is preferably not more than 100 g, more preferably not more than 80 g, still more preferably not more than 50 g, particularly preferably not more than 30 g, and most preferably not more than 20 g.

Of the tackifier resins, those satisfying the above iodine value are, among others, hydrogenated hydrocarbon resins, hydrogenated terpene resins and hydrogenated rosin resins.

Some tackifier resins satisfying the above iodine value are hydrocarbon resins such as QUINTONE 100 series (manufactured by ZEON CORPORATION), ARKON M series and ARKON P series (manufactured by ARAKAWA CHEMICAL INDUSTRIES, LTD.) and I-MARV series (manufactured by Idemitsu Kosan Co., Ltd.); terpene resins such as CLEARON series and YS POLYSTER UH (manufactured by YASUHARA CHEMICAL CO., LTD.) ; and rosin resins such as ESTER GUM H series and ESTER GUM HP series (manufactured by ARAKAWA CHEMICAL INDUSTRIES, LTD.).

Of the tackifier resins, those hydrocarbon resins and terpene resins (typically, hydrogenated hydrocarbon resins and hydrogenated terpene resins) satisfying the above iodine value are preferable because excellent weather resistance is obtained and coloration is reduced. In particular, those hydrocarbon resins (typically, hydrogenated hydrocarbon resins) satisfying the above iodine value are more preferable because excellent adhesion force to a wide variety of adherends and tack are realized, and also because excellent holding power and higher compatibility tend to be obtained. Those C₅-C₉ copolymer resins (typically, hydrogenated C₅-C₉ copolymer resins) satisfying the above iodine value are particularly preferable. Examples of the C₅-C₉ copolymer resins satisfying the above iodine value include ARKON M series and ARKON P series (manufactured by ARAKAWA CHEMICAL INDUSTRIES, LTD.) and I-MARV series (manufactured by Idemitsu Kosan Co., Ltd.).

To attain an excellent balance among adhesion force, tack and cohesion force, the content of the tackifier resin is preferably 1 to 300 parts by mass per 100 parts by mass of the acrylic block copolymer (I), and is more preferably 1 to 100 parts by mass, still more preferably 3 to 70 parts by mass, even more preferably 5 to 50 parts by mass, particularly preferably 5 to 40 parts by mass, and most preferably 5 to 35 parts by mass.

The hot melt adhesive composition of the present invention may include a plasticizer. The addition of a plasticizer imparts excellent hot-melt processability to the adhesive composition and generally allows the cost of the adhesive composition as a whole to be reduced. Examples of the plasticizers include organic acid esters derived from organic acids having 2 to 10 carbon atoms in the main chain, and oligomers thereof, such as phthalate esters including dibutyl phthalate, di-n-octyl phthalate, bis-2-ethylhexyl phthalate, di-n-decyl phthalate and diisodecyl phthalate, adipate esters including bis-2-ethylhexyl adipate and di-n-octyl adipate, sebacate esters, azelate esters and citrate esters; paraffins such as chlorinated paraffin; glycols such as polypropylene glycol; epoxy-containing polymeric plasticizers such as epoxidized soybean oil and epoxidized linseed oil; phosphate esters such as trioctyl phosphate and triphenyl phosphate; fatty acid esters such as sebacate esters including bis-2-ethylhexyl sebacate and di-n-butyl sebacate, and azelate esters such as bis-2-ethylhexyl azelate; phosphite esters such as triphenyl phosphite; acrylic oligomers such as poly (n-butyl (meth) acrylate) and poly(2-ethylhexyl (meth)acrylate); polybutene; polyisobutylene; polyisoprene; and process oils. These may be used singly, or two or more may be used in combination.

In particular, process oils are preferable from the points of view of cohesion force and compatibility and also to facilitate the control of viscosity. A more preferred plasticizer is a process oil selected from naphthene oils and paraffin oils because such a plasticizer has low selectivity for tackifier resins and can be used in a wide variety of adhesive formulations. The process oils may be used singly, or two or more may be used in combination. Examples of the process oils include naphthene oils such as SUNPURE N90 and NX90, and SUNTHENE series (manufactured by JAPAN SUN OIL COMPANY, LTD.); paraffin oils such as Diana Process Oil PW series (manufactured by Idemitsu Kosan **Co.,** Ltd.), and SUNPURE LW70 and P series (manufactured by JAPAN SUN OIL COMPANY, LTD.); and aroma oils such as JSO AROMA 790 (manufactured by JAPAN SUN OIL COMPANY, LTD.) and Vivatec 500 (manufactured by H & R). Other preferred plasticizers are organic acid esters derived from organic acids having 2 to 10 carbon atoms in the main chain, and oligomers thereof. Those derived from organic acids having 4 to 8 carbon atoms in the main chain are more preferable, and adipate esters are particularly preferable.

From the points of view of cohesion force, adhesion force and tack, the content of the plasticizer is preferably 1 to 200 parts by mass per 100 parts by mass of the acrylic block copolymer (I), and is more preferably 1 to 150 parts by mass, still more preferably 3 to 100 parts by mass, and particularly preferably 5 to 50 parts by mass.

Examples of the additional polymers include acrylic resins such as polymethyl methacrylate and (meth)acrylate ester copolymers; olefin resins such as polyethylene, ethylene-vinyl acetate copolymer, polypropylene, polybutene-1, poly-4-methylpentene-1 and polynorbornene; ethylene ionomers; styrene resins such as polystyrene, styrene-maleic anhydride copolymer, high-impact polystyrene, AS resins, ABS resins, AES resins, AAS resins, ACS resins and MBS resins; styrene-methyl methacrylate copolymer; polyester resins such as polyethylene terephthalate, polybutylene terephthalate and polylactic acid; polyamides such as nylon 6, nylon 66 and polyamide elastomers; polycarbonates; polyvinyl chloride; polyvinylidene chloride; polyvinyl alcohols; ethylene-vinyl alcohol copolymers; polyacetals; polyvinylidene fluoride; polyurethanes; modified polyphenylene ethers; polyphenylene sulfide; silicone rubber-modified resins; acrylic rubbers; silicone rubbers; styrene-based thermoplastic elastomers such as SEPS, SEBS and SIS; and olefin rubbers such as IR, EPR and EPDM. Of these, from the point of view of the compatibility with the acrylic block copolymer (I) contained in the hot melt adhesive composition, acrylic resins, ethylene-vinyl acetate copolymer, AS resins, polylactic acid, polyvinylidene fluoride and styrene-based thermoplastic elastomers are preferable, and (meth) acrylate ester copolymers are more preferable. The content of the additional polymer is preferably 1 to 65 parts by mass per 100 parts by mass of the acrylic block copolymer (I), and is more preferably 1 to 50 parts by mass, and still more preferably 1 to 30 parts by mass.

The above (meth)acrylate ester copolymer is preferably a diblock copolymer or a triblock copolymer which includes at least one polymer block (A) containing methacrylate ester units and at least one polymer block (B) containing acrylate ester units. (This copolymer is not the acrylic block copolymer (I).)

Examples of the fillers include inorganic fibers such as glass fibers and carbon fibers, and organic fibers; and inorganic fillers such as calcium carbonate, talc, carbon black, titanium oxide, silica, clay, barium sulfate and magnesium carbonate. The addition of inorganic fibers or organic fibers imparts durability to the hot melt adhesive composition that is obtained. The incorporation of inorganic fillers makes the obtainable hot melt adhesive composition resistant to heat and weathering.

The addition of a curing agent allows the hot melt adhesive composition of the present invention to be suitably used as a curable adhesive. The curing agent may be a light curing agent such as a UV curing agent, or a heat curing agent, with examples including benzoins, benzoin ethers, benzophenones, anthraquinones, benzils, acetophenones and diacetyls. Specific examples include benzoin, α-methylolbenzoin, α-t-butylbenzoin, benzoin methyl ether, benzoin ethyl ether, benzoin-n-propyl ether, benzoin isopropyl ether, benzoin isobutyl ether, α-methylolbenzoin methyl ether, α-methoxybenzoin methyl ether, benzoin phenyl ether, benzophenone, 9,10-anthraquinone, 2-ethyl-9,10-anthraquinone, benzil, 2,2-dimethoxy-1,2-diphenylethan-1-one (2,2-dimethoxy-2-phenylacetophenone) and diacetyl. The curing agents may be used singly, or two or more may be used in combination.

To increase the effect of the curing agent, the hot melt adhesive composition of the present invention may further include monomers, for example, acrylic acid, methacrylic acid, α-cyanoacrylic acid, α-halogenated acrylic acid, crotonic acid, cinnamic acid, sorbic acid, maleic acid, itaconic acid, and esters such as acrylate esters, methacrylate esters, crotonate esters and maleate esters; acrylamide; methacrylamide; acrylamide derivatives such as N-methylol acrylamide, N-hydroxyethyl acrylamide and N,N-(dihydroxyethyl) acrylamide; methacrylamide derivatives such as N-methylol methacrylamide, N-hydroxyethyl methacrylamide and N,N-(dihydroxyethyl) methacrylamide; vinyl esters; vinyl ethers; mono-N-vinyl derivatives; and styrene derivatives; and oligomers including these monomers as structural components. To attain higher durability, it is preferable to add esters such as acrylate esters, methacrylate esters, crotonate esters and maleate esters; vinyl ethers; styrene derivatives; and oligomers including these monomers as structural components. In addition to these monomers, crosslinking agents including a difunctional or polyfunctional monomer or oligomer may be added.

The addition of an anti-blocking agent to the hot melt adhesive composition of the present invention is expected to provide an enhancement in handleability. Examples of the anti-blocking agents include fatty acids such as stearic acid and palmitic acid; fatty acid metal salts such as calcium stearate, zinc stearate, magnesium stearate, potassium palmitate and sodium palmitate; waxes such as polyethylene waxes, polypropylene waxes and montanic acid waxes; low-molecular weight polyolefins such as low-molecular weight polyethylene and low-molecular weight polypropylene; acrylic resin powders; polyorganosiloxanes such as dimethylpolysiloxane; octadecylamine, alkyl phosphates, fatty acid esters, amide resin powders such as ethylenebisstearylamide, fluororesin powders such as ethylene tetrafluoride resin, molybdenum disulfide powders, silicone resin powders, silicone rubber powders and silica.

The hot melt adhesive composition of the present invention may be produced by any method without limitation. For example, the composition may be produced by mixing the components with use of a known mixer or kneader such as a kneader ruder, an extruder, a mixing roll or a Banbury mixer, usually at a temperature in the range of 50 to 200°C. Alternatively, the composition may be produced by mixing the components as a solution in an organic solvent and thereafter evaporating the organic solvent. The adhesive composition obtained may be used by being thermally melted. Examples of the organic solvents include toluene, ethyl acetate, ethylbenzene, methylene chloride, chloroform, tetrahydrofuran, methyl ethyl ketone, dimethyl sulfoxide, and toluene-ethanol mixed solvent. Of these, toluene, ethylbenzene, ethyl acetate and methyl ethyl ketone are preferable.

When the hot melt adhesive composition of the present invention is used by being thermally melted, it is preferable from the points of view of processability and handleability that the melt viscosity be low.

The hot melt adhesive composition of the present invention is suitably used in an adhesive product in the form of, for example, an adhesive layer including the hot melt adhesive composition or a laminate (for example, a laminate film or a laminate sheet) including such an adhesive layer.

The hot melt adhesive composition of the present invention, when used by being thermally melted, may be formed into an adhesive layer in the form of a sheet, a film or the like by a method such as, for example, hot melt coating, T-die extrusion, blown-film extrusion, calendering or lamination.

The laminate described above may be obtained by laminating an adhesive layer including the inventive hot melt adhesive composition, together with a substrate selected from various types of substrates such as papers, cellophanes, plastic materials, fabrics, wood and metals. Because the hot melt adhesive composition of the present invention has excellent transparency and weather resistance, a transparent laminate may be advantageously obtained by selecting a substrate layer made of a transparent material. Examples of the substrate layers made of a transparent material include, but are not limited to, substrate layers made of polyethylene terephthalate, triacetylcellulose, polyvinyl alcohol, cycloolefin resin, styrene-methyl methacrylate copolymer, polypropylene, polyethylene, polyvinyl chloride, ethylene-vinyl acetate copolymer, polycarbonate, polymethyl methacrylate, copolymers of polymers such as polyethylene or polypropylene with various monomers, mixtures of two or more kinds of the above polymers, and glass.

Examples of the configurations of the laminates include, but are not limited to, a two-layered configuration including an adhesive layer made of the inventive hot melt adhesive composition and a substrate layer, a three-layered configuration including two substrate layers and an adhesive layer made of the inventive hot melt adhesive composition (substrate layer/adhesive layer/substrate layer), a four-layered configuration including a substrate layer, two adhesive layers (x) and (y) made of different types of the inventive hot melt adhesive compositions, and a substrate layer (substrate layer/adhesive layer (x)/adhesive layer (y)/substrate layer), a four-layered configuration including a substrate layer, an adhesive layer (x) made of the inventive hot melt adhesive composition, an adhesive layer (z) made of a material outside the scope of the present invention, and a substrate layer (substrate layer/adhesive layer (x)/adhesive layer (z)/substrate layer), and a five-layered configuration including three substrate layers and two adhesive layers made of the inventive hot melt adhesive composition (substrate layer/adhesive layer/substrate layer/adhesive layer/substrate layer).

The thickness ratio in the laminate is not particularly limited. From the points of view of the adhesion properties, durability and handleability of the obtainable adhesive product, it is preferable that substrate layer/adhesive layer = 1/1000 to 1000/1, and it is more preferable that the ratio be 1/200 to 200/1.

To produce the laminate, an adhesive layer and a substrate layer may be formed separately and laminated together by a method such as lamination, or an adhesive layer may be formed directly onto a substrate layer. Alternatively, an adhesive layer and a substrate layer may be coextruded to form a layered structure at the same time. That is, the laminate may be produced as, for example, a coextruded film or a coextruded sheet.

To increase the adhesion force between the substrate layer and the adhesive layer in the inventive laminate, the surface of the substrate layer may be treated beforehand by surface treatment such as corona discharge treatment or plasma discharge treatment. Alternatively, an anchor layer may be formed by applying a resin or the like having adhesion properties onto the surface of at least one of the adhesive layer and the substrate layer.

Examples of the resins used in the anchor layers include ethylene-vinyl acetate copolymer, ionomers, block copolymers (for example, styrene triblock copolymers such as SIS and SBS, and diblock copolymers), ethylene-acrylic acid copolymer and ethylene-methacrylic acid copolymer. There may be one, or two or more anchor layers.

The anchor layer may be formed by any method without limitation. For example, an anchor layer may be formed by coating a solution of the above resin onto the substrate layer, or by thermally melting an anchoring composition which contains components including the above resin and applying the melt onto the surface of the substrate layer by a method such as T-die extrusion.

An anchor layer may be formed in such a manner that the above resin which will form an anchor layer and the inventive hot melt adhesive composition are coextruded to form simultaneously a unit including an anchor layer and an adhesive layer on the surface of the substrate layer. Alternatively, the anchoring resin and the hot melt adhesive composition may be laminated sequentially onto the surface of the substrate layer. In the case where the substrate layer is a plastic material, such a plastic material for forming the substrate layer, the resin for forming the anchor layer and the hot melt adhesive composition may be coextruded at the same time.

Adhesives including the hot melt adhesive composition of the present invention may be used in various applications. Adhesive layers including the hot melt adhesive composition may be used singly as adhesive sheets, and laminates including such an adhesive layer may find various applications. Examples of the applications include protection such as surface protection, masking, tying, packaging, office uses, labeling, decoration and display, bonding, dicing tapes, sealing, corrosion protection, waterproofing, medical and sanitary uses, prevention of glass scattering, electrical insulation, electronic holding and fixation, semiconductor manufacturing, optical display films, adhesive optical films, shielding from electromagnetic waves, and adhesives and adhesive tapes, films or sheets for sealing electric and electronic parts. Specific examples are described below.

Surface-protective adhesives, and surface-protective adhesive tapes, films and the like may be used for various materials such as metals, plastics, rubbers and wood. Specifically, they may be used to protect the surface of coatings, metals during plastic deformation or deep drawing, automobile parts, construction materials, buildings, and optical parts. Examples of the automobile parts include painted exterior panels, wheels, mirrors, windows, lights and light covers. Examples of the optical parts include various image display devices such as liquid crystal displays, organic EL displays, plasma displays and field emission displays; optical disk films such as polarizing films, polarizing plates, retardation plates, light guide plates, diffusion plates and DVDs; and precision fine coated faceplates for electronic and optical applications.

Examples of the applications of masking adhesives, tapes, films and the like include masking during the manufacturing of printed circuit boards or flexible printed circuit boards; masking during the plating and soldering of electronic devices; and masking during the manufacturing of vehicles such as automobiles, during the painting of vehicles and buildings, during printing, and during parting in civil engineering works.

Examples of the tying applications include wire harnesses, electric wires, cables, fibers, pipes, coils, winding wires, steel materials, ducts, plastic bags, foods, vegetables, and flowers and ornamental plants.

Examples of the packaging applications include packaging of heavy goods, export packaging, sealing of cardboard boxes, and sealing of cans.

Examples of the office uses include general office works, sealing, repairing of books, drawing and memos.

Examples of the labeling applications include price labels, product descriptions, tags, POPs, stickers, stripes, name plates, decoration and advertisements.

Examples of the labels include labels whose substrates are paper materials such as papers, processed papers (for example, aluminum-deposited paper, aluminum-laminated paper, varnish-coated paper and resin-coated paper) and synthetic papers; and films of such materials as cellophanes, plastic materials, fabrics, wood and metals. Specific examples of the substrates include quality papers, art papers, cast papers, thermal papers, foil papers; polyethylene terephthalate films, polyvinyl chloride films, OPP films, polylactic acid films, synthetic papers, thermal synthetic papers and over laminated films. Because of its excellent transparency and weather resistance, the hot melt adhesive composition of the present invention may be suitably used for labels having a transparent substrate. Further, the hot melt adhesive composition of the present invention is negligibly discolored with time and thus may be suitably used for thermal labels having thermal paper or thermal synthetic paper as the substrate.

Examples of the adherends to which the labels are laminated include plastic products such as plastic bottles and foamed plastic cases; paper products and cardboard products such as cardboard boxes; glass products such as glass bottles; metal products; and other inorganic material products such as ceramics.

Labels which include a laminate including an adhesive layer formed of the hot melt adhesive composition of the present invention do not significantly change adhesion force during storage at room temperature (25°C) and can be removed without residual adhesive after use. Further, such labels can be laminated to adherends even at low temperatures (-40 to +10°C) and do not release even when stored at low temperatures (-40 to +10°C).

Examples of the decoration and display applications include danger indication seals, line tapes, wire markings, luminous tapes and reflective sheets.

In the adhesive optical film applications, for example, a adhesive layer is formed on at least part or the entirety of one or both sides of such optical films as polarizing films, polarizing plates, retardation films, viewing angle expansion films, brightness enhancement films, antireflection films, antiglare films, color filters, light guide plates, diffusion films, prism sheets, electromagnetic wave shielding films, near infrared absorbing films, functional composite optical films, films for ITO lamination, impact resistant films, brightness enhancement films and visibility enhancement films. The adhesive optical films may be such that the surface of the above optical films is protected with a protective film which is an adhesive layer formed of the inventive hot melt adhesive composition. The adhesive optical films may be suitably used for various image display devices such as liquid crystal display devices, PDPs, organic EL display devices, electronic papers, game machines and mobile terminals.

Examples of the electrical insulation applications include protective coating or insulation of coils, and interlayer insulation in motors, transformers and the like.

Examples of the electronic holding and fixation applications include carrier tapes, packaging, fixation of cathode-ray tubes, splicing and rib enforcement.

Examples of the semiconductor manufacturing applications include protection of silicone wafers.

Examples of the bonding applications include various bonding uses, bonding uses in automobiles, trains, electrical equipment, printing plate fixation, architecture and nameplate fixation, general household uses, and bonding to rough surfaces, irregular surfaces and curved surfaces.

Examples of the sealing applications include sealing for the purposes of thermal insulation, vibration insulation, waterproofing, moisture proofing, soundproofing and dust proofing.

Examples of the corrosion protection and waterproofing applications include corrosion protection of gas pipes and water pipes, corrosion protection of large-diameter pipes, and corrosion protection of civil engineering and construction structures.

Examples of the medical and sanitary applications include percutaneous absorption drug applications such as analgesics and antiphlogistics (plasters and cataplasms), ischemic heart disease treatment agents, female hormone supplements, bronchodilators, cancer pain relievers, stop-smoking drugs, cold patches, antipruritic patches and keratin softening agents; various tape applications such as first-aid adhesive plasters (containing fungicides), surgical dressings, surgical tapes, bandages, hemostasis ties, tapes for human excrement disposal devices (colostomy device-fixing tapes), suture tapes, antibacterial tapes, fixing tapes, pressure-sensitive adhesive bandages, oral mucosal tapes, sporting tapes and hair removal tapes; cosmetic applications such as facial packs, eye moisturizing sheets and horny remover packs; sanitary material applications such as disposable diapers; cooling sheets, pocket warmers, dust proofing, waterproofing and pest trapping.

Examples of the electronic and electric parts to be sealed include liquid crystal monitors and solar cells.

### EXAMPLES

The present invention will be described in greater detail based on the following discussions such as Examples.

Properties in Examples and Comparative Examples were measured or evaluated by the following methods.

### (1) Weight average molecular weight (Mw) and molecular weight distribution (Mw/Mn) of acrylic block copolymers (I-1) to (I-4) and (II-1) to (II-3)

The molecular weights were determined by gel permeation chromatography (hereinafter, abbreviated as GPC) relative to polystyrene standards.
· Apparatus: GPC apparatus "HLC-8020" manufactured by TOSOH CORPORATION
· Separation columns: "TSKgel GMHXL", "G4000HXL" and "G5000HXL" manufactured by TOSOH CORPORATION were connected in series.
· Eluent: tetrahydrofuran
· Flow rate of eluent: 1.0 ml/min
· Column temperature: 40°C
· Detection method: differential refractive index (RI)

### (2) Ratio of monomers constituting polymer block (A) in acrylic block copolymers (I-1) to (I-4)

The ratio was determined by ¹H-NMR measurement.
· Apparatus: nuclear magnetic resonance apparatus "JNM-ECX400" manufactured by JEOL Ltd.
· Solvent: deuterated chloroform

In a ¹H-NMR spectrum of a monomer mixture used in the polymerization of a polymer block (A), the signals at near 3.75 ppm and near 4.15 ppm were assigned to the ester group (-O-CH₃) in methyl methacrylate and the ester group (-O-CH₂-CH₂-CH₂-CH₃) in n-butyl methacrylate, respectively. The molar ratio of the monomers was determined from the integral ratio of these peaks, and was converted into a mass ratio based on the molecular weights of the monomer units. The mass ratio of the monomers constituting the polymer block (A) was thus determined.

### (3) Ratio of monomers constituting polymer block (B) in acrylic block copolymers (I-1) to (I-4) and (II-1) to (II-3)

The ratio was determined by ¹H-NMR measurement.
·Apparatus: nuclear magnetic resonance apparatus "JNM-ECX400" manufactured by JEOL Ltd.
· Solvent: deuterated chloroform

In a ¹H-NMR spectrum of a monomer mixture used in the polymerization of a polymer block (B), the signals at near 4.1 ppm and near 4.2 ppm were assigned to the ester group (-O-CH₂-CH₂-CH₂-CH₃) in n-butyl acrylate and the ester group (-O-CH₂-CH(-CH₂-CH₃)-CH₂-CH₂-CH₂-CH₃) in 2-ethylhexyl acrylate, respectively. The molar ratio of the monomers was determined from the integral ratio of these peaks, and was converted into a mass ratio based on the molecular weights of the monomer units. The mass ratio of the monomers constituting the polymer block (B) was thus determined.

### (4) Contents of polymer blocks in acrylic block copolymers (I-1) to (I-4) and (II-1) to (II-3)

The contents were determined by ¹H-NMR measurement.
· Apparatus: nuclear magnetic resonance apparatus "JNM-ECX400" manufactured by JEOL Ltd.
· Solvent: deuterated chloroform

In a ¹H-NMR spectrum, the signals at near 3.6 ppm and near 3.8 to 4.2 ppm were assigned to the ester group (-O-CH₃) in a methyl methacrylate unit and to the ester group (-O-CH₂-CH₂-CH₂-CH₃ or -O-CH₂-CH(-CH₂-CH₃)-CH₂-CH₂-CH₂-CH₃) in an acrylate ester unit or the ester group (-O-CH₂-CH₂-CH₂-CH₃) in an n-butyl methacrylate unit, respectively. Based on the mass ratios of the monomers constituting the polymer blocks (A) and (B) determined in the aforementioned manner, the contents of the comonomer components were determined from the integral ratio of these peaks.

### (5) Complex viscosity and hot-melt processability (loss shear modulus)

Block copolymers described later were each dissolved into toluene to give 30 mass% toluene solutions. The solutions were cast to give 1 mm thick sheets. The sheets were tested under the following conditions to measure the dynamic viscoelasticity in torsional vibration and to determine the complex viscosity at 160°C and the temperature of the peak top of loss shear modulus in the region of temperatures of room temperature (25°C) and above. The complex viscosity at 160°C and the temperature of the peak top of loss shear modulus are indicators of hot-melt processability. When the temperature of the peak top of loss shear modulus is 130°C or below, melt processing is advantageously feasible at a relatively low temperature. The temperature of the peak top of loss shear modulus is more preferably not more than 120°C.
· Apparatus: "Advanced Rheometric Expansion System" manufactured by Rheometric Scientific Ltd.
· Parallel plates: diameter 8 mm
· Vibration mode: torsional vibration
· Frequency: 6.28 rad/sec
· Measurement temperature range: -50°C to 250°C
· Heat-up rate: 2°C/min
· Strains: 0.05% (-50°C to -37°C), 1.0% (-37°C to -15°C), 5.0% (-15°C to 250°C)

### (6) Adhesion force

The measurement was performed in accordance with JIS Z0237 except for the peel rate and the manner in which the samples were stored. Specifically, a 25 µm thick adhesive tape fabricated by the method which will be described later was cut to a width of 25 mm and a length of 100 mm and was laminated to a glass plate, a stainless steel (SUS304) plate (a bright annealed (hereinafter, written as BA) plate) and a polyethylene plate. The samples were stored at room temperature for 24 hours, and the tape was peeled at 23°C and at a rate of 300 mm/min in 180° direction to measure the adhesion force. If stick slip occurred, the maximum value was taken as the adhesion force.

### (7) Holding power (SAFT)

The measurement was performed in accordance with ASTM D4498. Specifically, a 25 µm thick adhesive tape fabricated by the method which will be described later was laminated to a stainless steel (SUS304) plate (a BA plate) over an area of 25 mm in width and 25 mm in length, and a 500 g load was hung from the tape. The temperature was increased from 40°C to 205°C at a rate of 0.5°C/min. The temperature at which the tape dropped was measured.

### (8) Holding power (creep)

The measurement was performed in accordance with JIS Z0237. Specifically, a 25 µm thick adhesive tape fabricated by the method which will be described later was laminated to a stainless steel (SUS304) plate (a BA plate) over an area of 25 mm in width and 25 mm in length, and a 1 kg load was hung from the tape at a temperature of 60°C. The time at which the tape dropped, or the amount of displacement after 1000 minutes was measured.

### (9) Ball tack

The ball tack was measured in accordance with JIS Z0237. Specifically, a 25 µm thick adhesive tape fabricated by the method which will be described later was arranged so as to have an inclination angle of 30°, and balls conforming to the ball tack method were rolled thereon to determine the number of the largest ball which stopped on the adhesive tape.

### (10) 90° Peel creep

At a temperature of 23°C, a 25 µm thick adhesive tape (25 mm × 150 mm) fabricated by the method which will be described later was laminated to a polyethylene plate so that the laminated area was 25 mm × 100 mm. The rest of the tape was folded so that the adhesive side would be inwardly bent. After the sample had been stored at room temperature for 24 hours, the polyethylene plate was fixed horizontally with the adhesive tape facing downward, and a 30 g load was hung from the folded portion at a temperature of 23°C. The time required for the tape to drop was measured.

### ((Synthetic Examples 1 to 7))

Acrylic block copolymers (I-1) to (I-4) and (II-1) to (II-3) used in Examples and Comparative Examples were synthesized in the following manner.

### ((Synthetic Example 1)) [Synthesis of acrylic block copolymer (I-1)]

(1) A three-way cock was attached to a 2 L three-necked flask, and the inside of the flask was purged with nitrogen. While performing stirring at room temperature, the flask was loaded with 976 g of toluene and 65.4 g of 1,2-dimethoxyethane. Subsequently, 42.2 g of a toluene solution was added which contained 21.2 mmol of isobutylbis(2,6-di-t-butyl-4-methylphenoxy)aluminum. Further, 6.30 g of a solution of sec-butyllithium in cyclohexane was added which contained 8.18 mmol of sec-butyllithium.
(2) Subsequently, 44.3 g of a methyl methacrylate/n-butyl methacrylate mixture (90/10 by mass) was added. The reaction liquid was yellow at first and turned to colorless after 60 minutes of stirring at room temperature.
(3) Subsequently, the inside temperature of the polymerization liquid was lowered to -30°C, and 305 g of an n-butyl acrylate/2-ethylhexyl acrylate mixture (50/50 by mass) was added dropwise over a period of 2 hours. After the completion of the dropwise addition, the mixture was stirred at -30°C for 5 minutes.
(4) Further, 49.4 g of a methyl methacrylate/n-butyl methacrylate mixture (90/10 by mass) was added, and the mixture was stirred at room temperature overnight.
(5) The polymerization reaction was terminated by the addition of 17.0 g of methanol. The resultant reaction liquid was poured into 15 kg of methanol, and thereby a white deposit was precipitated. Thereafter, the white deposit was recovered and dried. Consequently, 370 g of an acrylic block copolymer (I-1) was obtained.

### ((Synthetic Example 2)) [Synthesis of acrylic block copolymer (I-2)]

(1) A three-way cock was attached to a 2 L three-necked flask, and the inside of the flask was purged with nitrogen. While performing stirring at room temperature, the flask was loaded with 953 g of toluene and 70.7 g of 1,2-dimethoxyethane. Subsequently, 43.1 g of a toluene solution was added which contained 21.7 mmol of isobutylbis(2,6-di-t-butyl-4-methylphenoxy)aluminum. Further, 5.19 g of a solution of sec-butyllithium in cyclohexane was added which contained 8.84 mmol of sec-butyllithium.
(2) Subsequently, 47.8 g of a methyl methacrylate/n-butyl methacrylate mixture (80/20 by mass) was added. The reaction liquid was yellow at first and turned to colorless after 60 minutes of stirring at room temperature.
(3) Subsequently, the inside temperature of the polymerization liquid was lowered to -30°C, and 329 g of an n-butyl acrylate/2-ethylhexyl acrylate mixture (50/50 by mass) was added dropwise over a period of 2 hours. After the completion of the dropwise addition, the mixture was stirred at -30°C for 5 minutes.
(4) Further, 53.3 g of a methyl methacrylate/n-butyl methacrylate mixture (80/20 by mass) was added, and the mixture was stirred at room temperature overnight.
(5) The polymerization reaction was terminated by the addition of 17.8 g of methanol. The resultant reaction liquid was poured into 15 kg of methanol, and thereby a white deposit was precipitated. Thereafter, the white deposit was recovered and dried. Consequently, 410 g of an acrylic block copolymer (I-2) was obtained.

### ((Synthetic Example 3)) [Synthesis of acrylic block copolymer (I-3)]

(1) A three-way cock was attached to a 2 L three-necked flask, and the inside of the flask was purged with nitrogen. While performing stirring at room temperature, the flask was loaded with 840 g of toluene and 62.3 g of 1,2-dimethoxyethane. Subsequently, 38.0 g of a toluene solution was added which contained 19.1 mmol of isobutylbis(2,6-di-t-butyl-4-methylphenoxy)aluminum. Further, 4.56 g of a solution of sec-butyllithium in cyclohexane was added which contained 7.79 mmol of sec-butyllithium.
(2) Subsequently, 42.1 g of a methyl methacrylate/n-butyl methacrylate mixture (60/40 by mass) was added. The reaction liquid was yellow at first and turned to colorless after 60 minutes of stirring at room temperature.
(3) Subsequently, the inside temperature of the polymerization liquid was lowered to -30°C, and 290 g of an n-butyl acrylate/2-ethylhexyl acrylate mixture (50/50 by mass) was added dropwise over a period of 2 hours. After the completion of the dropwise addition, the mixture was stirred at -30°C for 5 minutes.
(4) Further, 47.0 g of a methyl methacrylate/n-butyl methacrylate mixture (60/40 by mass) was added, and the mixture was stirred at room temperature overnight.
(5) The polymerization reaction was terminated by the addition of 15.7 g of methanol. The resultant reaction liquid was poured into 15 kg of methanol, and thereby a white deposit was precipitated. Thereafter, the white deposit was recovered and dried. Consequently, 360 g of an acrylic block copolymer (I-3) was obtained.

### ((Synthetic Example 4)) [Synthesis of acrylic block copolymer (I-4)]

(1) A three-way cock was attached to a 2 L three-necked flask, and the inside of the flask was purged with nitrogen. While performing stirring at room temperature, the flask was loaded with 1084 g of toluene and 35.2 g of 1,2-dimethoxyethane. Subsequently, 36.7 g of a toluene solution was added which contained 18.5 mmol of isobutylbis(2,6-di-t-butyl-4-methylphenoxy)aluminum. Further, 2.58 g of a solution of sec-butyllithium in cyclohexane was added which contained 4.40 mmol of sec-butyllithium.
(2) Subsequently, 31.2 g of a methyl methacrylate/n-butyl methacrylate mixture (80/20 by mass) was added. The reaction liquid was yellow at first and turned to colorless after 60 minutes of stirring at room temperature.
(3) Subsequently, the inside temperature of the polymerization liquid was lowered to -30°C, and 215 g of an n-butyl acrylate/2-ethylhexyl acrylate mixture (50/50 by mass) was added dropwise over a period of 2 hours. After the completion of the dropwise addition, the mixture was stirred at -30°C for 5 minutes.
(4) Further, 34.9 g of a methyl methacrylate/n-butyl methacrylate mixture (80/20 by mass) was added, and the mixture was stirred at room temperature overnight.
(5) The polymerization reaction was terminated by the addition of 12.7 g of methanol. The resultant reaction liquid was poured into 15 kg of methanol, and thereby a white deposit was precipitated. Thereafter, the white deposit was recovered and dried. Consequently, 240 g of an acrylic block copolymer (I-4) was obtained.

### ((Synthetic Example 5)) [Synthesis of acrylic block copolymer (II-1)]

(1) A three-way cock was attached to a 2 L three-necked flask, and the inside of the flask was purged with nitrogen. While performing stirring at room temperature, the flask was loaded with 953 g of toluene and 70.7 g of 1,2-dimethoxyethane. Subsequently, 43.1 g of a toluene solution was added which contained 21.7 mmol of isobutylbis(2,6-di-t-butyl-4-methylphenoxy)aluminum. Further, 5.19 g of a solution of sec-butyllithium in cyclohexane was added which contained 8.84 mmol of sec-butyllithium.
(2) Subsequently, 47.8 g of methyl methacrylate was added. The reaction liquid was yellow at first and turned to colorless after 60 minutes of stirring at room temperature.
(3) Subsequently, the inside temperature of the polymerization liquid was lowered to -30°C, and 329 g of an n-butyl acrylate/2-ethylhexyl acrylate mixture (50/50 by mass) was added dropwise over a period of 2 hours. After the completion of the dropwise addition, the mixture was stirred at -30°C for 5 minutes.
(4) Further, 53.3 g of methyl methacrylate was added, and the mixture was stirred at room temperature overnight.
(5) The polymerization reaction was terminated by the addition of 17.8 g of methanol. The resultant reaction liquid was poured into 15 kg of methanol, and thereby a white deposit was precipitated. Thereafter, the white deposit was recovered and dried. Consequently, 400 g of an acrylic block copolymer (II-1) was obtained.

### «Synthetic Example 6» [Synthesis of acrylic block copolymer (II-2)]

(1) A three-way cock was attached to a 2 L three-necked flask, and the inside of the flask was purged with nitrogen. While performing stirring at room temperature, the flask was loaded with 868 g of toluene and 43.4 g of 1,2-dimethoxyethane. Subsequently, 60.0 g of a toluene solution was added which contained 40.2 mmol of isobutylbis(2,6-di-t-butyl-4-methylphenoxy)aluminum. Further, 2.89 g of a solution of sec-butyllithium in cyclohexane was added which contained 5.00 mmol of sec-butyllithium.
(2) Subsequently, 35.9 g of methyl methacrylate was added. The reaction liquid was yellow at first and turned to colorless after 60 minutes of stirring at room temperature.
(3) Subsequently, the inside temperature of the polymerization liquid was lowered to -30°C, and 240 g of n-butyl acrylate was added dropwise over a period of 2 hours. After the completion of the dropwise addition, the mixture was stirred at -30°C for 5 minutes.
(4) Further, 35.9 g of methyl methacrylate was added, and the mixture was stirred at room temperature overnight.
(5) The polymerization reaction was terminated by the addition of 3.50 g of methanol. The resultant reaction liquid was poured into 15 kg of methanol, and thereby a white deposit was precipitated. Thereafter, the white deposit was recovered and dried. Consequently, 310 g of an acrylic block copolymer (II-2) was obtained.

### ((Synthetic Example 7)) [Synthesis of acrylic block copolymer (II-3)]

(1) A three-way cock was attached to a 2 L three-necked flask, and the inside of the flask was purged with nitrogen. While performing stirring at room temperature, the flask was loaded with 1084 g of toluene and 35.2 g of 1,2-dimethoxyethane. Subsequently, 36.7 g of a toluene solution was added which contained 18.5 mmol of isobutylbis(2,6-di-t-butyl-4-methylphenoxy)aluminum. Further, 2.58 g of a solution of sec-butyllithium in cyclohexane was added which contained 4.40 mmol of sec-butyllithium.
(2) Subsequently, 31.2 g of methyl methacrylate was added. The reaction liquid was yellow at first and turned to colorless after 60 minutes of stirring at room temperature.
(3) Subsequently, the inside temperature of the polymerization liquid was lowered to -30°C, and 215 g of an n-butyl acrylate/2-ethylhexyl acrylate mixture (50/50 by mass) was added dropwise over a period of 2 hours. After the completion of the dropwise addition, the mixture was stirred at -30°C for 5 minutes.
(4) Further, 34.9 g of methyl methacrylate was added, and the mixture was stirred at room temperature overnight.
(5) The polymerization reaction was terminated by the addition of 12.7 g of methanol. The resultant reaction liquid was poured into 15 kg of methanol, and thereby a white deposit was precipitated. Thereafter, the white deposit was recovered and dried. Consequently, 250 g of an acrylic block copolymer (II-3) was obtained.

Table 1 describes the structures, weight average molecular weights (Mw) and molecular weight distributions (Mw/Mn) of the acrylic block copolymers (I-1) to (I-4) and (II-1) to (II-3) obtained in Synthetic Examples 1 to 7, and the contents and configurations of the polymer blocks.

### [Table 1]

**Table 1**

| | Syn. Ex. 1 | Syn. Ex. 2 | Syn. Ex. 3 | Syn. Ex. 4 | Syn. Ex. 5 | Syn. Ex. 6 | Syn. Ex. 7 |
|---|---|---|---|---|---|---|---|
| Block copolymer | I-1 | I-2 | I-3 | I-4 | II-1 | II-2 | II-3 |
| Block structure | (A)-(B)-(A) | (A)-(B)-(A) | (A)-(B)-(A) | (A)-(B)-(A) | (A)-(B)-(A) | (A)-(B)-(A) | (A)-(B)-(A) |
| Mw of block copolymer | 57,000 | 57,000 | 56,000 | 79,000 | 55,000 | 71,000 | 77,000 |
| Mw/Mn of block copolymer | 1.09 | 1.07 | 1.07 | 1.07 | 1.10 | 1.18 | 1.13 |
| Content (mass%) of polymer blocks (A) | 23.1 | 23.6 | 24.4 | 24.7 | 23.4 | 23.5 | 22.6 |
| Content (mass%) of polymer block (B) | 76.9 | 76.4 | 75.6 | 75.3 | 76.6 | 76.5 | 77.4 |
| Configuration (mass ratio) of polymer blocks (A) | MMA/nBMA = 90/10 | MMA/nBMA = 80/20 | MMA/nBMA = 60/40 | MMA/nBMA = 80/20 | MMA | MMA | MMA |
| Configuration (mass ratio) of polymer block (B) | nBA/2EHA = 50/50 | nBA/2EHA = 50/50 | nBA/2EHA = 50/50 | nBA/2EHA = 50/50 | nBA/2EHA = 50/50 | nBA | nBA/2EHA = 50/50 |

| | | | | | | | |
|---|---|---|---|---|---|---|---|
| MMA: methyl methacrylate, nBMA: n-butyl methacrylate, nBA: n-butyl acrylate, 2EHA: 2-ethylhexyl acrylate | | | | | | | |

### ((Examples 1 to 4 and Comparative Examples 1 to 3))

The acrylic block copolymers (I-1) to (I-4) and (II-1) to (II-3) produced in Synthetic Examples 1 to 7 were heated to 100 to 140°C, and were applied to coat a polyethylene terephthalate film (TOYOBO ESTER FILM E5000 manufactured by TOYOBO CO., LTD., thickness 50 µm) with a coater so that the thickness of the adhesive layer would be 25 µm. Adhesive tapes were thus fabricated. When a need arose to laminate the adhesive tape to an adherend for evaluation, a 2 kg roller was moved on the tape back and forth twice at a speed of 10 mm/sec.

The adhesive tapes were tested by the methods described hereinabove to evaluate their properties, the results being described in Table 2.

### [Table 2]

**Table 2**

| | Ex. 1 | Ex. 2 | Ex. 3 | Ex. 4 | Comp. Ex. 1 | Comp. Ex. 2 | Comp. Ex. 3 |
|---|---|---|---|---|---|---|---|
| Block copolymer | (I-1) | (I-2) | (I-3) | (I-4) | (II-1) | (II-2) | (II-3) |
| Temperature (°C) of peak top of loss shear modulus | 120 | 105 | 75 | 130 | 130 | 135 | 149 |
| Complex viscosity (Pa·s) (@160°C) | 1700 | 240 | <100 | 5500 | 5000 | 3900 | 6700 |
| Adhesion force (N/25 mm) with glass | 11.5 | 11.3 | 14.9 | 14.1 | 11.7 | 18.9 | 13.9 |
| Adhesion force (N/25 mm) with SUS | 14.3 | 15.3 | 18.8 | 13.0 | 14.7 | 12.5 | 15.6 |
| Adhesion force (N/25 mm) with PE | 0.7 | 0.7 | 1.4 | 0.8 | 0.8 | 0.7 ss | 2.6 |
| SAFT (drop temperature: °C) | 133 | 117 | 78 | 143 | 141 | 152 | 161 |
| Creep (displacement after 1000 min: mm/drop time: min) | No displacement | 0.1 mm | 29 min | No displacement | No displacement | No displacement | No displacement |
| Ball tack | 3 | 3 | 4 | 5 | 3 | 3 | 4 |
| 90° Peel creep (drop time) | 7' 38" | 7'23" | 24'28" | 7'27" | 8'33" | 4'30" | 13'2" |
| Hot melt adhesion force @130°C N/10 mm | 31.3 | 33.1 | >50 | 32.3 | 32.5 | 40.6 | 25.6 |

| | | | | | | | |
|---|---|---|---|---|---|---|---|
| ss: stick slip | | | | | | | |

From the results in Table 1 and Table 2, it has been shown that Examples 1 to 4 which involved the acrylic block copolymers (I-1) to (I-4) satisfying the requirements of the present invention attained excellent hot-melt processability at a relatively low temperature and an excellent balance among adhesion force, tack and holding power resisting 90° peeling. Further, the comparison of Example 4 and Comparative Example 3, which involved the acrylic block copolymers (I-4) and (II-3) having the same molecular configuration and differing only in the configuration of the blocks (A), shows that Example 4 satisfying the requirements of the present invention attained excellent hot-melt processability at a low temperature and attained an excellent performance in the ball tack test.

The adhesive compositions of the present invention have excellent weather resistance, durability, hot-melt processability and adhesion properties, exhibit excellent adhesion force, cohesion force, tack and holding power, and are easily controlled in viscosity. The present invention makes it possible to provide adhesives and adhesive products which each can be hot-melt processed by being thermally melted at a relatively low temperature. Further, the adhesive compositions of the present invention can be supplied in easily handleable forms such as pellets and are useful in industry.

## Claims

1. A hot melt adhesive composition comprising an acrylic block copolymer (I) comprising at least one polymer block (A) comprising methacrylate ester units, and at least one polymer block (B) comprising acrylate ester units,
wherein the methacrylate ester units constituting the polymer block (A) include at least a methyl methacrylate (a1) unit and a methacrylate ester (a2) unit represented by the general formula CH₂=C(CH₃)-COOR¹ (1) wherein R¹ is a C₂₋₁₆ organic group, and
wherein the polymer block (A) has a glass transition temperature of not less than 0°C and not more than 95°C, and the polymer block (B) has a glass transition temperature of not less than -80°C and less than 0°C, as measured in accordance with the method specified in the description, respectively.

2. The hot melt adhesive composition according to Claim 1, wherein the acrylic block copolymer (I) has a weight average molecular weight (Mw) of 30,000 to 300,000, as measured in accordance with the method specified in the description.

3. The hot melt adhesive composition according to Claim 1 or 2, wherein the acrylic block copolymer (I) has a molecular weight distribution (Mw/Mn) of 1.0 to 1.5.

4. The hot melt adhesive composition according to any one of Claims 1 to 3, wherein the polymer block (A) has a mass ratio ((a1)/(a2)) of the methyl methacrylate (a1) units to the methacrylate ester (a2) units of 5/95 to 95/5.

5. The hot melt adhesive composition according to any one of Claims 1 to 4, wherein the acrylate ester units constituting the polymer block (B) include an acrylate ester (b) unit represented by the general formula CH₂=CH-COOR² (2) wherein R² is a C₁₋₁₂ organic group.

6. The hot melt adhesive composition according to Claim 5, wherein the acrylate ester units constituting the polymer block (B) include an acrylate ester (b1) unit represented by the formula (2) wherein R² is a C₄₋₆ organic group, and an acrylate ester (b2) unit represented by the formula (2) wherein R² is a C₇₋₁₂ organic group.

7. The hot melt adhesive composition according to Claim 6, wherein the polymer block (B) has a mass ratio ((b1)/(b2)) of the acrylate ester (b1) units to the acrylate ester (b2) units of 1/99 to 95/5.

8. The hot melt adhesive composition according to any one of Claims 1 to 7, wherein the methacrylate ester (a2) unit is an n-butyl methacrylate unit.

9. The hot melt adhesive composition according to any one of Claims 1 to 8, wherein the acrylic block copolymer (I) has a complex viscosity at 160°C of not more than 6,000 Pa·s, as measured in accordance with the method specified in the description.

10. The hot melt adhesive composition according to any one of Claims 1 to 9, wherein the acrylic block copolymer (I) has a peak top of loss shear modulus at a temperature of not more than 135°C in a region of temperatures of 25°C and above, as measured in accordance with the method specified in the description.

11. An adhesive product comprising an adhesive layer comprising the hot melt adhesive composition described in any one of Claims 1 to 10.

## Patentansprüche

1. Schmelzklebstoffzusammensetzung, umfassend ein Acrylblockcopolymer (I), welches mindestens einen Polymerblock (A), umfassend Methacrylatester-Einheiten, und mindestens einen Polymerblock (B), umfassend Acrylatester-Einheiten, umfasst,
wobei die Methacrylatester-Einheiten, welche den Polymerblock (A) ausmachen, zumindest eine Methylmethacrylat-Einheit (a1) und eine Methacrylatester-Einheit (a2), dargestellt durch die allgemeine Formel CH₂=C(CH₃)-COOR¹ (1), wobei R¹ eine C₂₋₁₆-organische Gruppe ist, einschließen, und
wobei der Polymerblock (A) eine Glasübergangstemperatur von nicht weniger als 0°C und nicht mehr als 95°C und der Polymerblock (B) eine Glasübergangstemperatur von nicht weniger als -80°C und weniger als 0°C, jeweils gemessen in Übereinstimmung mit dem in der Beschreibung angegebenen Verfahren, aufweisen.

2. Schmelzklebstoffzusammensetzung nach Anspruch 1, wobei das Acrylblockcopolymer (I) ein gewichtsgemitteltes Molekulargewicht (Mw) von 30000 bis 300000, gemessen in Übereinstimmung mit dem in der Beschreibung angegebenen Verfahren, aufweist.

3. Schmelzklebstoffzusammensetzung nach Anspruch 1 oder 2, wobei das Acrylblockcopolymer (I) eine Molekulargewichtsverteilung (Mw/Mn) von 1,0 bis 1,5 aufweist.

4. Schmelzklebstoffzusammensetzung nach einem der Ansprüche 1 bis 3, wobei der Polymerblock (a) ein Massenverhältnis ((a1)/(a2)) der Methylmethacrylat-Einheiten (a1) zu den Methacrylatester-Einheiten (a2) von 5/95 bis 95/5 aufweist.

5. Schmelzklebstoffzusammensetzung nach einem der Ansprüche 1 bis 4, wobei die Acrylatester-Einheiten, welche den Polymerblock (B) ausmachen, eine Acrylatester-Einheit (b), dargestellt durch die allgemeine Formel CH₂=CH-COOR² (2), wobei R² eine C₁₋₁₂-organische Gruppe ist, einschließen.

6. Schmelzklebstoffzusammensetzung nach Anspruch 5, wobei die Acrylatester-Einheiten, welche den Polymerblock (B) ausmachen, eine Acrylatester-Einheit (b1), dargestellt durch die Formel (2), wobei R² eine C₄₋₆-organische Gruppe ist, und eine Acrylatester-Einheit (b2), dargestellt durch die Formel (2), wobei R² eine C₇₋₁₂-organische Gruppe ist, einschließen.

7. Schmelzklebstoffzusammensetzung nach Anspruch 6, wobei der Polymerblock (B) ein Massenverhältnis ((b1)/(b2)) der Acrylatester-Einheiten (b1) zu den Acrylatester-Einheiten (b2) von 1/99 bis 95/5 aufweist.

8. Schmelzklebstoffzusammensetzung nach einem der Ansprüche 1 bis 7, wobei die Methacrylatester-Einheit (a2) eine n-Butylmethacrylat-Einheit ist.

9. Schmelzklebstoffzusammensetzung nach einem der Ansprüche 1 bis 8, wobei das Acrylblockcopolymer (I) eine komplexe Viskosität bei 160°C von nicht mehr als 6000 Pa·s, gemessen in Übereinstimmung mit dem in der Beschreibung angegebenen Verfahren, aufweist.

10. Schmelzklebstoffzusammensetzung nach einem der Ansprüche 1 bis 9, wobei das Acrylblockcopolymer (I) eine Peakspitze des Verlustschermoduls bei einer Temperatur von nicht mehr als 135°C in einem Temperaturbereich von 25°C und darüber, gemessen in Übereinstimmung mit dem in der Beschreibung angegebenen Verfahren, aufweist.

11. Klebstofferzeugnis, umfassend eine Klebstoffschicht, welche die Schmelzklebstoffzusammensetzung nach einem der Ansprüche 1 bis 10 umfasst.

## Revendications

1. Composition d'adhésif thermofusible comprenant un copolymère à blocs acrylique (I) comprenant au moins un bloc polymère (A) comprenant des unités d'ester de méthacrylate et au moins un bloc polymère (B) comprenant des unités d'ester d'acrylate,
dans laquelle les unités d'ester de méthacrylate constituant le bloc polymère (A) incluent au moins une unité de méthacrylate de méthyle (a1) et une unité d'ester de méthacrylate (a2) représentée par la formule générale CH₂=C(CH₃)-COOR¹ (1), dans laquelle R¹ est un groupe organique en C₂₋₁₆, et
dans laquelle le bloc polymère (A) a une température de transition vitreuse de pas moins de 0 °C et pas plus de 95 °C, et le bloc polymère (B) a une température de transition vitreuse de pas moins de -80 °C et moins de 0 °C, telles que mesurées conformément au procédé spécifié dans la description, respectivement.

2. Composition d'adhésif thermofusible selon la revendication 1, dans laquelle le copolymère à blocs acrylique (I) a un poids moléculaire moyen en poids (Mw) de 30 000 à 300 000, tel que mesuré conformément au procédé spécifié dans la description.

3. Composition d'adhésif thermofusible selon la revendication 1 ou 2, dans laquelle le copolymère à blocs acrylique (I) a une distribution de poids moléculaires (Mw/Mn) de 1,0 à 1,5.

4. Composition d'adhésif thermofusible selon l'une quelconque des revendications 1 à 3, dans laquelle le bloc polymère (A) a un rapport massique ((a1)/(a2)) des unités de méthacrylate de méthyle (a1) sur les unités d'ester de méthacrylate (a2) de 5/95 à 95/5.

5. Composition d'adhésif thermofusible selon l'une quelconque des revendications 1 à 4, dans laquelle les unités d'ester d'acrylate constituant le bloc polymère (B) incluent une unité d'ester d'acrylate (b) représentée par la formule générale CH₂=CH-COOR² (1), dans laquelle R² est un groupe organique en C₁₋₁₂.

6. Composition d'adhésif thermofusible selon la revendication 5, dans laquelle les unités d'ester d'acrylate constituant le bloc polymère (B) incluent une unité d'ester d'acrylate (b1) représentée par la formule (2), dans laquelle R² est un groupe organique en C₄₋₆, et une unité d'ester d'acrylate (b2) représentée par la formule (2), dans laquelle R² est un groupe organique en C₇₋₁₂.

7. Composition d'adhésif thermofusible selon la revendication 6, dans laquelle le bloc polymère (B) a un rapport massique ((b1)/(b2)) des unités d'ester d'acrylate (b1) sur les unités d'ester d'acrylate (b2) de 1/99 à 95/5.

8. Composition d'adhésif thermofusible selon l'une quelconque des revendications 1 à 7, dans laquelle l'unité d'ester de méthacrylate (a2) est une unité de méthacrylate de n-butyle.

9. Composition d'adhésif thermofusible selon l'une quelconque des revendications 1 à 8, dans laquelle le copolymère à blocs acrylique (I) a une viscosité complexe à 160 °C de pas plus de 6000 Pa·s, telle que mesurée conformément au procédé spécifié dans la description.

10. Composition d'adhésif thermofusible selon l'une quelconque des revendications 1 à 9, dans laquelle le copolymère à blocs acrylique (I) a un haut de pic de module de cisaillement de perte à une température de pas plus de 135 °C dans une région de températures de 25 °C et supérieures, tel que mesuré conformément au procédé spécifié dans la description.

11. Produit adhésif comprenant une couche adhésive comprenant la composition d'adhésif thermofusible décrite dans l'une quelconque des revendications 1 à 10.
